# EUROPÄISCHE PATENTSCHRIFT

(11) **EP 0 990 351 B1**
(45) Veröffentlichungstag und Bekanntmachung des Hinweises auf die Patenterteilung: **26.03.2003**
(21) Anmeldenummer: 98936176.1
(22) Anmeldetag: 16.06.1998
(51) Int. Cl.: H04Q 7/20

(54) **VERFAHREN, MOBILSTATION UND BASISSTATION ZUR SIGNALÜBERTRAGUNG**
METHOD, MOBILE STATION AND BASE STATION FOR TRANSMITTING SIGNALS
PROCEDE, STATION MOBILE ET STATION DE BASE POUR LA TRANSMISSION DE SIGNAUX

(30) Priorität: 17.06.1997 DE 19725569
(43) Veröffentlichungstag der Anmeldung: 05.04.2000
(73) Patentinhaber: SIEMENS AKTIENGESELLSCHAFT, 80333 München (DE)
(72) Erfinder: MENZEL, Christian, D-82216 Maisach (DE)
(86) Internationale Anmeldenummer: DE9801631
(87) Internationale Veröffentlichungsnummer: WO98058504

(56) Entgegenhaltungen:
- DE-C- 19 524 659
- DE-C- 19 534 156

## Beschreibung

Die Erfindung betrifft ein Verfahren, eine Mobilstation und eine Basisstation zur Signalübertragung über eine Funkschnittstelle zwischen Funkstationen eines TDMA Mobil-Kommunikationssystems.

Mobil-Kommunikationssysteme dienen der Übertragung von Daten mit Hilfe von elektromagnetischen Wellen über eine Funkschnittstelle zwischen einer sendenden und einer empfangenden Funkstation, wobei in der Regel eine der Funkstationen nicht stationär ist. Ein Beispiel für ein Mobil-Kommunikationssystem ist das bekannte GSM-Mobilfunknetz (Global System for Mobile Communications), bei dem zur Übertragung eines Teilnehmersignals jeweils ein durch einen schmalbandigen Frequenzbereich und einen Zeitschlitz gebildeter Kanal vorgesehen ist. Da ein Teilnehmersignal in einem Kanal in Frequenz und Zeit von übrigen Teilnehmersignalen getrennt ist, kann die empfangende Funkstation eine Detektion der Daten dieses Teilnehmersignals vornehmen. Durch die Bildung von Zeitschlitzen liegt eine Zeitmultiplex-Teilnehmerseparierung und damit ein TDMA (time division multiple access) Mobil-Kommunikationssystem vor.

Die netzseitige Funkstation eines Mobilfunknetzes ist eine Basisstation, die über eine Funkschnittstelle mit Mobilstationen kommuniziert. Die Übertragung von einer Mobilstation zur Basisstation wird als Aufwärtsrichtung, die Übertragung von der Basisstation zu einer Mobilstation als Abwärtsrichtung bezeichnet. Ein Kanal wird durch zumindest einen Zeitschlitz pro Zeitmultiplex-Rahmen gebildet. Mehrere Zeitmultiplex-Rahmen bilden dabei einen Makrorahmen. Weiterhin bezeichnen die Trägerfrequenz und eventuell eine Frequenzsprungsequenz den Kanal.

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der Dauer der gesamten Datenübertragung eine logische Verbindung zwischen den zwei Kommunikationsendgeräten, jedoch werden physikalische Ressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Das aus DE 44 02 903 A1, DE 195 24 659 C1 und DE 195 34 156 C1 bekannte Paketdatenübertragungsverfahren bietet sich insbesondere für Kommunikationssysteme mit begrenzten physikalischen Ressourcen an. Beispielsweise in Mobilfunksystemen, wie dem GSM-Mobilfunksystem, sind die physikalischen Ressourcen der Funkschnittstelle, d.h. die funktechnischen Ressourcen, im Frequenzbereich - Anzahl der Frequenzbänder und Zeitschlitz - beschränkt und müssen rationell genutzt werden.

Ist eine Datenübertragung von der sich in Wartestellung befindlichen Mobilstation zum. Netz, also in Aufwärtsrichtung, gewünscht, wird diese Mobilstation eine Zugriffswunsch äußern, der vom Netz ausgewertet wird. Dazu sind innerhalb des Paketdatenkanals Kanäle zum Zugriff vorgesehen, in denen für einen willkürlichen und vorher nicht planbaren Zugriff benötigte Signalisierungsnachrichten, jedoch keine Nutzdaten übertragen werden.

Der Zugriffswunsch wird durch eine sogenannten Zugriffsblock (random access burst) ausgedrückt, der im Vergleich zu normalen Funkblöcken verkürzt ist, damit ein Empfang auch ohne zeitliche Synchronisierung der Funkstationen erfolgen kann. Dieser Zugriffsblock ist immer verkürzt. Unabhängig davon, in welchem Zustand sich die Mobilstation befindet, werden weiterhin keine Vorkehrungen für die Beeinflußung des Sendezeitpunkts für den Zugriffsblock getroffen. Jede Mobilstation wählt diesen Sendezeitpunkt innerhalb des Zeitschlitzes willkürlich.

Der Erfindung liegt die Aufgabe zugrunde, ein verbessertes Verfahren und verbesserte Einrichtungen zur Signalübertragung eines TDMA Mobil-Kommunikationssystems anzugeben, die die funktechnischen Ressourcen der Funkschnittstelle besser nutzen. Diese Aufgabe wird durch das Verfahren mit den Merkmalen des Patentanspruchs 1 oder 6, die Mobilstation mit den Merkmalen des Patentanspruchs 10 und durch die Basisstation mit den Merkmalen des Patentanspruchs 11 gelöst. Vorteilhafte Weiterbildungen der Erfindung sind den Unteransprüchen zu entnehmen.

Erfindungsgemäß wird bei Verfahren zur Signalübertragung in einem Zeitschlitz der Funkschnittstelle ein erster Funkblock übertragen wird, wobei eine sendeseitige Synchronisation der Übertragung des ersten Funkblocks erfolgt, so daß der erste Funkblock zu einem vorbestimmten Zeitpunkt innerhalb des Zeitschlitzes bei der empfangenden Funkstation eintrifft. Im gleichen Zeitschlitz wird zumindest ein zweiter Funkblock übertragen, der getrennt vom ersten Funkblock auswertbar ist.

Durch eine entsprechende Untergliederung eines Zeitschlitzes wird die Möglichkeit geschaffen, eine größere Datenmenge zu übertragen und damit die funktechnischen Ressourcen besser zu nutzen. Ein Zeitschlitz ist damit nicht nur einer Mobilstation zugeordnet, sondern kann von mehreren Mobilstationen unabhängig voneinander genutzt werden. Durch die sendeseitige Synchronisation wird gewährleistet, daß die Funkblöcke im Zeitschlitz nicht gleichzeitig eintreffen und somit getrennt auswertbar sind. Es werden nicht alle Zeitschlitze der TDMA Funk-Kommunikationssystems derartig ausgestaltet, sondern die Unterteilung in zwei getrennte Funkblöcke, die zudem von unterschiedlichen Sendern stammen bzw. für unterschiedliche Empfänger bestimmt sind, nur für einzelne Zeitschlitze innerhalb eines Rahmens freigegeben.

Nach einer Weiterbildung der Erfindung haben die in einem Zeitschlitz übertragenen Funkblöcke die gleiche Länge. Es werden damit ein Anzahl von standardisierten Blocklängen eingeführt, die einen Zeitschlitz so ausfüllen, daß möglichst wenig ungenutzte Übergangszeiten anfallen und ein Zeitschlitz nach Bedarf mit zwei, drei oder mehr Funkblöcken gefüllt wird. Somit lassen sich viele sehr kurze Nachrichten übertragen. Eine interessante Anwendung findet dieses Verfahren in Mobilfunksystemen der 3. Generation, wie z.B. UMTS.

Werden alternativ dazu in einem Zeitschlitz unterschiedliche Typen von Funkblöcken übertragen, dann können in einem Zeitschlitz auch gemischt Nutz- und Signalisierungsinformationen übertragen werden. Bestehende standardisierte Funkblöcke müssen nicht angepaßt werden, aber zusätzliche Funkblöcke sind in Restzeiten des Zeitschlitzes übertragbar. Damit entsteht eine sehr flexible Funkschnittstelle, die mit den zusätzlichen zweiten Funkblöcken neue Dienste anbieten kann, ohne daß weitere funktechnische Ressourcen zur Verfügung gestellt werden müssen.

Eine besonders vorteilhafte Anwendung findet das erfindungsgemäße Verfahren bei Funkstationen, die durch Basisstationen und Mobilstationen gebildet sind, wobei der erste Funkblock ein im Vergleich zu übrigen Funkblöcken verkürzter Funkblock ist. Besonders bei den verkürzten Funkblöcken liegt eine schlechte Nutzung der funktechnischen Ressourcen der Funkschnittstelle vor, die bisher nicht verbessert wurde, da die Detektierbarkeit der Funkblöcke im Vordergrund stand.

Ist das Mobil-Kommunikationssystem ein GSM-Mobilfunknetz und der erste Funkblock ein sogenannter Zugriffsfunkblock, dann wird nur etwa die Hälfte eines Zeitschlitzes ausgefüllt und große Reserven können durch das erfindungsgemäße Verfahren ausgenutzt werden,

Die Erfindung läßt sich auch durch ein Verfahren zur Signalübertragung über eine Funkschnittstelle zwischen Mobilstationen und einer Basisstation eines TDMA Mobil-Kommunikationssystems beschreiben, bei dem als Zugriffsblock in einem Zeitschlitz der Funkschnittstelle ein erster verkürzter Funkblock in Aufwärtsrichtung übertragen wird, der nach einer sendeseitigen Synchronisation zu einem vorbestimmten Zeitpunkt innerhalb des Zeitschlitzes bei der empfangenden Funkstation eintrifft.

Die Zugriffsblöcke sind wesentlich kürzer als die Zeitschlitze und werden bisher nicht synchronisiert, da man den Mobilstationen auch im nichtsynchronisierten Zustand jederzeit eine schnellen Zugriff gestatten will. Damit wird jedoch verkannt, daß beispielsweise bei einer Paketdatenübertragung die Mobilstationen im Wartezustand bereits synchronisiert sind. Damit ist auch der Zeitpunkt des Eintreffens eines Zugriffsblocks bei der Basisstation vorhersehbar und die übrige Zeit eines Zeitschlitz kann anderweitig, beispielsweise zum Ausmessen des Kanals durch die Basisstation, zur Verlängerung des Zugriffsblocks, zum Abschalten des Empfängers oder zur Übertragung eines zweiten Funkblocks genutzt werden.

Die Übertragung der Funkblöcke wird vorteilhafterweise derartig synchronisiert, daß die Zeitpunkte des Eintreffens der Funkblöcke zu im wesentlichen nicht überlappenden Funkblöcke führen. Eine Entzerrung und Dekodierung ist somit wesentlich einfacher möglich. Kleinere, durch Mehrwegeausbreitung verursachte Überlappungen können jedoch toleriert werden.

Vorteilhafterweise orientiert sich der Zeitpunkt des Eintreffens des ersten Funkblocks am Anfang des Zeitschlitzes. Damit können die bereits bestimmten Werte des Zeitabgleichs, die Vorhaltzeit (timing advance), übernommen werden und zusätzlicher Berechnungsaufwand ist nicht nötig.

Die Erfindung wird nachfolgend bezugnehmend auf zeichnerische Darstellungen anhand von Ausführungsbeispielen näher erläutert.

Dabei zeigen
- FIG 1: ein Blockschaltbild eines TDMA Mobil-Kommunikationssystems zur Paketdatenübertragung,
- FIG 2: einen Kanal mit Zeitmultiplex-Teilnehmerseparierung,
- FIG 3: eine schematische Darstellung von im GSM-Mobilfunknetz benutzten Funkblocktypen,
- FIG 4: eine schematische Darstellung des Aufbaus eines zweiten Funkblocks, falls der erste Funkblock ein Zugriffsblock ist,
- FIG 5: eine schematische Darstellung von Funkblöcken des Zeitschlitzes,
- FIG 6: ein Blockschaltbild einer Mobilstation, und
- FIG 7: ein Blockschaltbild einer Basisstation.

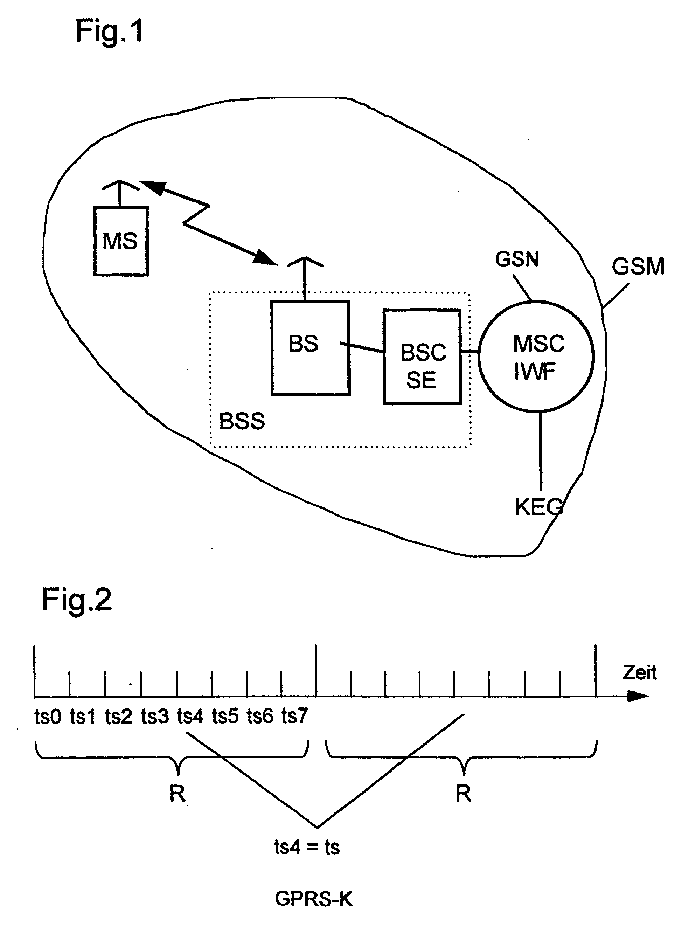

Das Zeitmultiplex-Mobilfunksystem nach FIG 1 ist beispielsweise ein GSM-Mobilfunknetz GSM, das zumindest ein Basisstationssystem BSS mit einem Basisstationscontroler BSC und einer Basisstation BS enthält. Im Funkbereich der einen dargestellten Basisstation BS befinden sich Mobilstationen MS. Das Basisstationssystem BSS stellt die Verbindung zu weiteren Einrichtungen des GSM-Mobilfunknetzes GSM her. Im Basisstationscontroller BSC ist eine Steuereinrichtung SE implementiert, die eine Zuteilung von funktechnischen Ressourcen für die Mobilstationen MS durchführt. Die Steuereinrichtung SE kann jedoch auch in anderen Einrichtungen des Mobilfunksystem realisiert werden.

Diese weiteren Einrichtungen sind z.B. eine Mobilvermittlungsstelle MSC und eine Einheit zur Realisierung von Interworking-Funktionen IWF. Das Zusammenwirken von Mobilvermittlungsstelle MSC und Interworking-Funktionen IWF ergibt eine Paketvermittlungsstelle, die auch als GSN (GPRS support node) bezeichnet wird. Diese Paketvermittlungsstelle ist an eine Mobilvermittlungsstelle MSC zur Sprachvermittelung angeschlossen, alternativ könnte sie als abgesetzte eigene Einheit realisiert werden.

Das GSM-Mobilfunknetz GSM kann mit weiteren Kommunikationsnetzen verbunden sein. Beispielhaft ist ein weiteres Kommunikationsendgerät KEG mit dem GSM-Mobilfunknetz über ein Festnetz verbindbar oder ist selbst Bestandteil dieses GSM-Mobilfunknetzes GSM.

Das GSM-Mobilfunknetz GSM soll zur Paketdatenübertragung parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen.

Die Funkschnittstelle zwischen den Mobilstationen MS und einer Basisstation BS ist durch ein Frequenzband und zumindest einen Zeitschlitz ts charakterisiert. Nach FIG 2 werden beispielsweise acht Zeitschlitze ts (ts0 bis ts7) zu einem Rahmen R zusammengefaßt. Der Rahmen R wiederholt sich zyklisch, wobei zu einem Kanal ein wiederkehrender Zeitschlitz beispielsweise der Zeitschlitz ts = ts4 gehört. Dieser Zeitschlitz ts wird im folgenden als Kanal GPRS-K für die Paketdatenübertragung im Sinne des Dienstes GPRS (General Paket Radio Services) verwendet. Mehrere Zeitmultiplex-Rahmen R können zu einem Makrorahmen zusammengefaßt werden.

Soll eine Mobilstation MS diesen Dienst nutzen, dann führt sie entsprechend der GSM-Terminologie einen willkürlichen Zugriff (random access) mit einem kurzen Zugriffsblock (access burst) durch und wechselt auf einen dedizierten Kontrollkanal. Es folgt eine Authentifikation und das Setzen des Kontexts, beispielsweise eine temporäre Kennung (TLLI) bezüglich einer logischen Verbindung (standby state). Soll das weitere Kommunikationsendgerät KEG über den Paketdatendienst mit einer Mobilstation MS kommunizieren, erfolgt netzseitig ein Rufen (paging) der gewünschten Mobilstation MS sowie der geschilderte willkürliche Zugriff zum Wechsel in den standby state.

Für ein Senden von Paketdaten in Aufwärtsrichtung sendet die Mobilstation MS wiederum einen Zugriffsblock auf dem Kontrollkanal, worauf der Mobilstation MS eine Kurzkennung, ein GPRS-Kanal GPRS-K und die aus dem Zugriffsblock bestimmte, im GPRS-Kanal GPRS-K zu verwendende Vorhaltzeit (timing advance) mitgeteilt wird. Daraufhin befindet sich die Mobilstation MS im Wartezustand (ready state). Im Wartezustand werden in Abständen von 1 bis 2 s weitere Zugriffsblöcke zur Aktualisierung der Vorhaltzeit gesendet. Falls die Mobilstation MS daraufhin in Aufwärtsrichtung Daten übertragen will, wird erneut ein Zugriffsblock (beispielsweise der später geschilderte zweite Funkblock fb2 oder ein folgender Zugriffsblock für den Zeitabgleich) gesendet, der von der Steuereinrichtung SE ausgewertet wird, und nach Möglichkeitkeit bald entsprechende funktechnische Ressourcen zugewiesen werden.

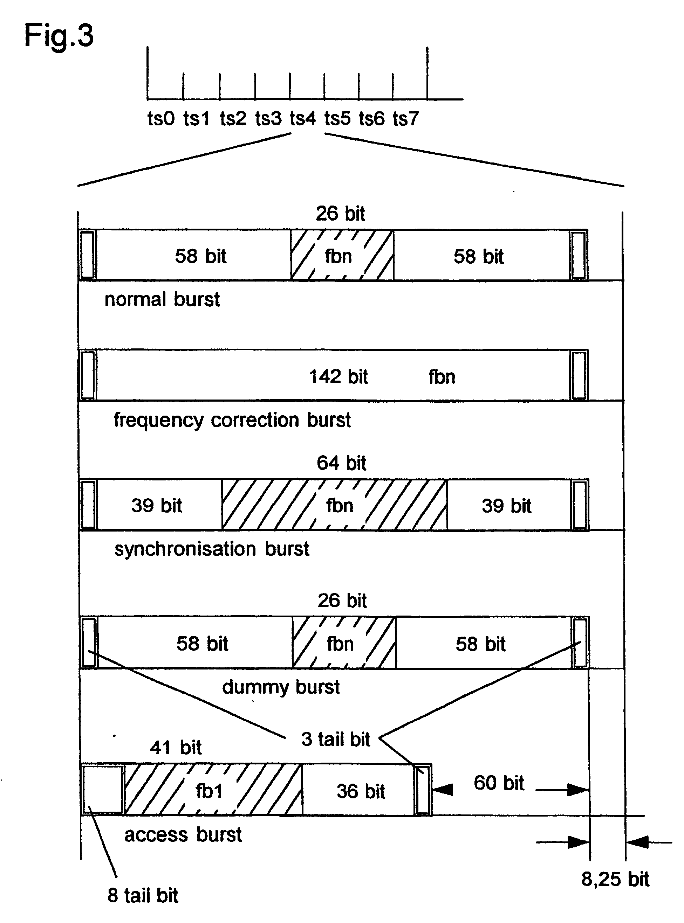

FIG 3 zeigt, welche Typen von Funkblöcken im GSM Mobilfunknetz üblich sind. Wobei immer nur ein Funkblock pro Zeitschlitz ts, beispielsweise ts4, übertragen wird. Ein Funkblock wird durch je 3 bit eingeleitet und beendet, die dem Einschwingen und Ausschwingen der Entzerrer und anderer Baugruppen dienen. Eine Schutzzeit von 8,25 bit innerhalb des Zeitschlitzes ts4 bleibt ungenutzt und bildet den Ausgleich für mögliche, nicht ausgeregelte Laufzeitunterschiede zwischen Funkblöcke unterschiedlicher Zeitschlitze ts4, ts5.

Ein normaler Funkblock fbn enthält zwei mal 58 bit Nutzinformation, in die in der Mitte eine Trainingssequenz von 26 bit eingebettet ist. Ein Funkblock fbn zur Frequenzkorrektion enthält eine Sequenz von 142 bekannten bit, ein Funkblock fbn zur Synchronisation zwei Teile mit je 39 bit und eine verlängerte Trainingssequenz von 64 bit. Ein Leerblock fbn ist entsprechend dem normalen Funkblock fbn aufgebaut.

Weiterhin ist ein erster Funkblock, der im folgenden als Zugriffsblock fb1 bezeichnet ist, gezeigt, der eine Einleitung von 8 bit hat und daraufhin 41 bit Trainingssequenz und 36 bit Nutzinformation enthält. Die Schutzzeit für den Zugriffsblock fb1 ist dabei auf insgesamt 68,35 bit ausgedehnt. Wobei damit 60 bit für zumindest einen zweiten Funkblock fb2, wie anschließend gezeigt, zur Verfügung stehen. Der Zugriffsblock fb1 ist verkürzt, da er im GSM-Mobilfunknetz für Situationen vorgesehen ist, in denen trotz unbekannter Signallaufzeiten und damit ungenauer Sendezeitpunkte ein sicherer Empfang bewirkt werden soll.

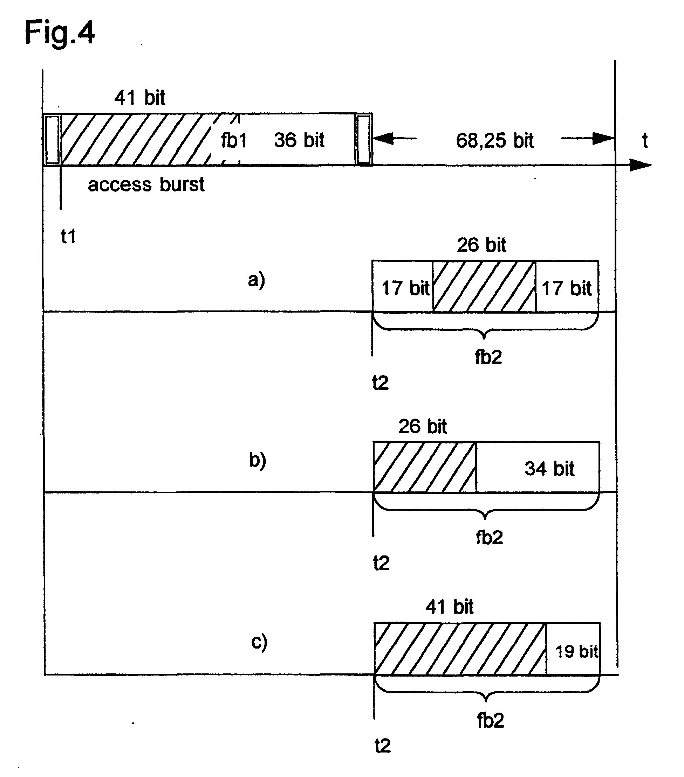

In FIG 4 sind beispielhaft drei Varianten zum Aufbau eines zweiten Funkblockes fb2 zum Auffüllen des Zeitschlitzes ts4 aufgeführt. Das Eintreffen der Funkblöcke fb1 und fb2 beim Empfänger wird durch zwei Zeitpunkte t1 bzw. t2 bezeichnet, die nach Bestimmen von Vorhaltzeiten durch die Synchronisation der sendenden Mobilstation MS eingestellt werden. Die Funkblöcke fb1, fb2 überlappen sich nicht.

Der zweite Funkblock fb2 nach FIG 4a) enthält eine normale Trainingssequenz von 26 bit und zwei Datenblöcke von jeweils 17 bit. Nach FIG 4b) geht einem Datenblock von 34 bit eine Trainingssequenz von 26 bit voran. Währenddessen bei FIG 4c) die Trainingssequenz auf 41 bit verlängert ist und somit ein Datenblock von lediglich 19 bit folgt. Der zweite Funkblock fb2 hat damit jeweils eine Länge von 60 bit. Es sind jedoch auch andere Funkblocklängen möglich. Beispielsweise lassen sich die zweiten Funkblöcke fb2 wiederum durch ein oder mehrere bit einleiten bzw. beenden. Es ist ebenso möglich, die Schutzzeit zum Zeitschlitzende zu verlängern oder zu verkürzen.

In den Datenblöcken der zweiten Funkblöcke fb2 können Nutzund Signalisierungsinformationen, beispielsweise Anforderungen für einen Zuweisung von funktechnischen Ressourcen in Aufwärtsrichtung oder andere Signalisierungsinformationen bzw. Daten innerhalb eines Kurznachrichtendienstes, zusätzlich übertragen werden. Damit wird die Datenrate der Funkzelle in Aufwärtsrichtung erhöht.

Alternativ zum Aussenden eines zweiten Funkblocks fb2 könnte die verlängerte Schutzzeit auch für einen verlängerten Zugriffsblock fb1 genutzt werden. Es ist ebenso möglich diese Schutzzeit zum Ausschalten bzw. Schalten in einen Energiesparmodus auf Sende- oder Empfangsseite zu nutzen. Besonders auf der Empfangsseite sind durch die Kenntnis des Zeitpunkts t1 des Eintreffens des Zugriffsblocks fb1 und damit auch der Zeitpunkt des Endes des Zugriffsblocks fb1 die Voraussetzungen für dieses Schalten gegeben. Weiterhin ist die Möglichkeit der Kommunikation der Mobilstationen MS untereinander gegeben.

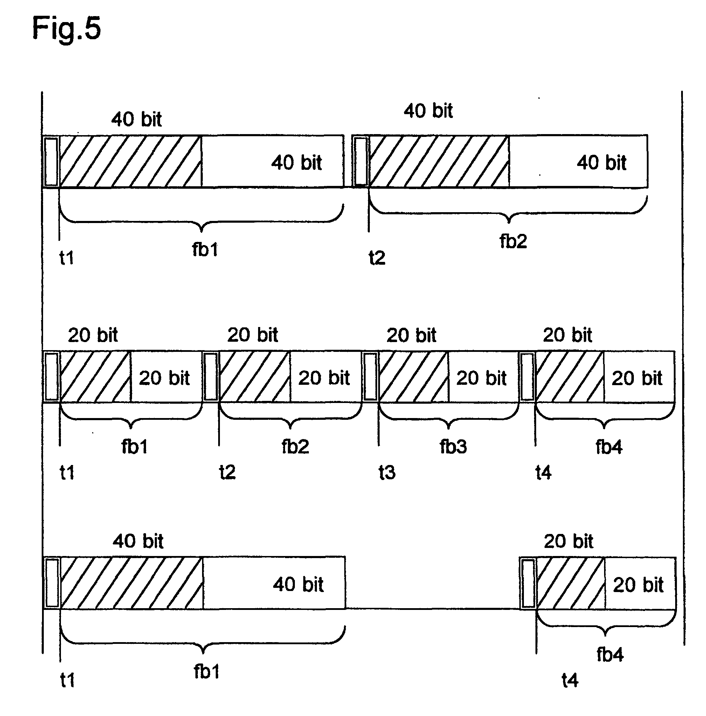

In FIG 5 ist ein Zeitschlitz eines TDMA Mobil-Kommunikationssystems gezeigt, bei dem die Länge der Funkblöcke fb1, fb2, fb3, fb4 so abgestimmt ist, daß stufenweise eine oder mehrere Funkblöcke gleicher oder unterschiedlicher Länge übertragen werden können. Bei dieser Struktur ist die Anzahl unterschiedlicher Typen von Funkblöcken zugunsten einer besseren Auswertbarkeit eingeschränkt. Durch diese Struktur läßt sich die Datenrate in Aufwärts- oder Abwärtsrichtung stufenweise einstellen. Die gezeigte Einteilung der Funkblöcke fb1, fb2, fb3, fb4 in 40 bzw. 20 bit Trainingssequenz und 40 bzw. 20 bit Nutzdaten kann dabei variabel einstellbar sein. Gleiches gilt für die Schutzzeiten zwischen den Funkblöcken fb1, fb2, fb3, fb4 bzw. für die Zeiten der Einleitung. Die Funkblöcke fb1, fb2, fb3, fb4 können dabei von einer oder unterschiedlichen Funkstationen MS, BS gesendet werden.

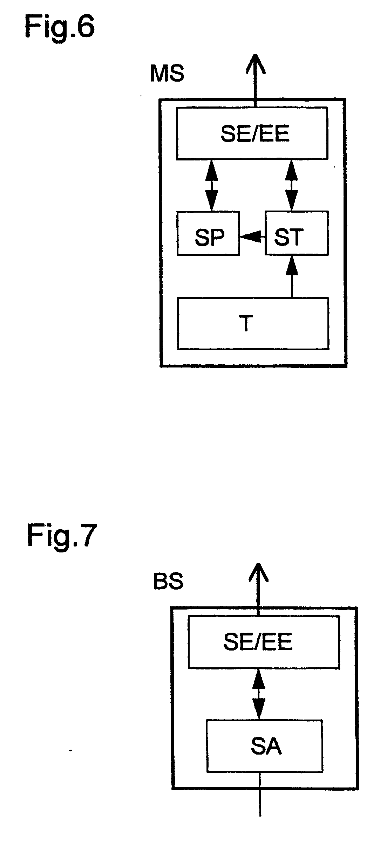

Die Mobilstation MS nach FIG 6 enthält ein Bedienfeld T, eine Signalverarbeitungseinrichtung SP, eine Steuereinrichtung ST und eine Sende/Empfangseinrichtung SE/EE. Am Bedienfeld T kann der Teilnehmer Eingaben vornehmen, u.a. eine Eingabe für ein Aussenden eines Datenpakets mittels des Paketdatendienstes GPRS. In der Signalverarbeitungseinrichtung SP wird daraufhin ein Zugriffsblock fb1 gebildet und in der Steuereinrichtung ST der Zeitschlitz ts und nach der vorher bestimmten Vorhaltzeit der Sendezeitpunkt ausgewählt. Der Zugriffsblock fb1 wird nach einer entsprechenden Signalaufbereitung durch die Sendeeinrichtung SE schmalbandig im ausgewählten Zeitschlitz ts synchronisiert gesendet. Die gleiche oder eine andere Mobilstation MS können wiederum ausgehend von der Signalverarbeitungseinrichtung SP und der Steuereinrichtung ST einen zweiten Funkblock fb2 im gleichen Zeitschlitz ts senden.

Die Basisstation BS enthält eine Sende/Empfangseinrichtung SE/EE, die die Empfangssignale verstärkt, ins Basisband umgesetzt und demoduliert. In einem Analog/Digital-Wandler werden die Empfangssignale in Symbole mit diskretem Wertevorrat umgewandelt, beispielsweise digitalisiert. In der Signalauswerteeinrichtung SA, die z.B. als digitaler Signalprozessor ausgebildet ist, werden auch die Zugriffsblöcke fb1 und die zweiten Funkblöcke fb2, fb3, fb4 getrennt und verarbeitet.

Die Nutz- und Signalisierungsinformationen der Funkblöcke fb1, fb2, fb3, fb4 werden daraufhin weiteren Einrichtungen, z.B. innerhalb der Basisstation BS oder dem Basisstationscontroller BSC, zugeführt.

## Patentansprüche

1. Verfahren zur Signalübertragung über eine Funkschnittstelle zwischen Funkstationen (BS, MS) eines TDMA Mobil-Kommunikationssystems, bei dem
in einem Zeitschlitz (ts) der Funkschnittstelle ein erster Funkblock (fb1) übertragen wird,
**dadurch gekennzeichnet,**
**daß** eine sendeseitige Synchronisation der Übertragung des ersten Funkblocks (fb1) erfolgt, so daß der erste Funkblock (fb1) zu einem vorbestimmten Zeitpunkt (t1) innerhalb des Zeitschlitzes (ts) bei der empfangenden Funkstation (BS, MS) eintrifft, und
**daß** im gleichen Zeitschlitz (ts) zumindest ein zweiter Funkblock (fb2) übertragen wird, der getrennt vom ersten Funkblock (fb1) auswertbar ist.

2. Verfahren nach Anspruch 1,
**dadurch gekennzeichnet,**
**daß** die in einem Zeitschlitz (ts) übertragenen Funkblöcke (fb1, fb2) die gleiche Länge haben.

3. Verfahren nach Anspruch 1,
**dadurch gekennzeichnet,**
**daß** in einem Zeitschlitz (ts) unterschiedliche Typen von Funkblöcken (fb1, fb2) übertragen werden.

4. Verfahren nach einem der vorherigen Ansprüche,
**dadurch gekennzeichnet,**
**daß** die Funkstationen eine Basisstation (BS) und Mobilstationen (MS) sind und der erste Funkblock (fb1) ein im Vergleich zu übrigen Funkblöcken (fbn) verkürzter Funkblock ist.

5. Verfahren nach Anspruch 4,
**dadurch gekennzeichnet,**
**daß** das Mobil-Kommunikationssystem ein GSM-Mobilfunknetz und der erste Funkblock (fb1) ein sogenannter Zugriffsblock ist.

6. Verfahren zur Signalübertragung über eine Funkschnittstelle zwischen Mobilstationen (MS) und einer Basisstation (BS) eines TDMA Mobil-Kommunikationssystems, bei dem als Zugriffsblock in einem Zeitschlitz (ts) der Funkschnittstelle ein verkürzter erster Funkblock (fb1) übertragen wird,
**dadurch gekennzeichnet,**
**daß** eine sendeseitige Synchronisation der Übertragung des ersten Funkblocks (fb1) erfolgt, so daß der erste Funkblock (fb1) zu einem vorbestimmten Zeitpunkt (t1) innerhalb des Zeitschlitzes (ts) bei der empfangenden Funkstation (BS, MS) eintrifft, und
**daß** im gleichen Zeitschlitz (ts) zumindest ein zweiter Funkblock (fb2) übertragen wird, der getrennt vom ersten Funkblock (fb1) auswertbar ist.

7. Verfahren nach einem der vorherigen Ansprüche,
**dadurch gekennzeichnet,**
**daß** die Übertragung der Funkblöcke (fb1, fb2) derartig synchronisiert wird, daß die Zeitpunkte (t1, t2) des Eintreffens der Funkblöcke (fb1, fb2) zu zwei empfangenen, sich im wesentlichen nicht überlappenden Funkblöcken (fb1, fb2) führen.

8. Verfahren nach einem der vorherigen Ansprüche,
**dadurch gekennzeichnet,**
**daß** der Zeitpunkt (t1) des Eintreffens des ersten Funkblocks (fb1) sich am Anfang des Zeitschlitzes (ts) orientiert.

9. Verfahren nach einem der vorherigen Ansprüche,
**dadurch gekennzeichnet,**
**daß** der Zeitschlitz (ts) für ein Paketdatenübertragungsverfahren reserviert ist.

10. Mobilstation (MS) für ein TDMA Mobil-Kommunikationssystem, zur Durchführung des Verfahrens nach Anspruch 1 oder 6,
mit einer Sende/Empfangseinrichtung (SE) zum Senden und Empfangen von Funkblöcken,
mit einer Signalverarbeitungseinrichtung (SP) zum Erzeugen eines ersten und/oder zweiten Funkblocks (fb1, fb2),
mit einer Steuereinrichtung (ST) zum Synchronisieren des Sendens des ersten Funkblocks (fb1) innerhalb eines Zeitschlitzes (ts) und zum Auslösen des Senden des ersten Funkblocks (fb1),
**dadurch gekennzeichnet,**
**daß** die Steuereinrichtung (ST) derart ausgebildet ist, daß die Synchronisation der Übertragung des ersten Funkblocks (fb1) zu einem vorbestimmten Empfangszeitpunkt (t1) innerhalb des Zeitschlitzes (ts) bei einer Basisstation (BS) führt, so daß von der Basisstation (BS) im gleichen Zeitschlitz (ts) zumindest ein zweiter, von einer weiteren Mobilstation (MS) gesendeter Funkblock (fb2) getrennt vom ersten Funkblock (fb1 auswertbar ist.

11. Basisstation (BS) für ein TDMA Mobil-Kommunikationssystem, zur Durchführung des Verfahrens nach Anspruch 1,
mit einer Empfangseinrichtung (EE) zum Empfangen von zumindest zwei, von unterschiedlichen Mobilstationen (MS) in einem Zeitschlitz (ts) gesendeten, zeitlich trennbaren Funkblöcken (fb1, fb2),
mit einer Signalauswerteeinrichtung (SA) zum Trennen und Verarbeiten der Funkblöcke (fb1, fb2).

## Claims

1. Method for transmitting signals via a radio interface between radio stations (BS, MS) of a TDMA mobile communication system, in which a first burst (fb1) is transmitted in a time slot (ts) of the radio interface, **characterized in that** the transmission of the first burst (fb1) is synchronized at the transmitting end so that the first burst (fb1) arrives at the receiving radio station (BS, MS) at a predetermined time (t1) within the time slot (ts), and **in that** at least one second burst (fb2), which can be evaluated separately from the first burst (fb1), is transmitted in the same time slot (ts).

2. Method according to Claim 1, **characterized in that** the bursts (fb1, fb2) transmitted in one time slot (ts) have the same length.

3. Method according to Claim 1, **characterized in that** different types of bursts (fb1, fb2) are transmitted in one time slot (ts).

4. Method according to one of the preceding claims, **characterized in that** the radio stations are a base station (BS) and mobile stations (MS) and the first burst (fb1) is a burst which is shorter than the remaining bursts (fbn).

5. Method according to Claim 4, **characterized in that** the mobile communication system is a GSM mobile radio network and the first burst (fb1) is a so-called access burst.

6. Method for transmitting signals via a radio interface between mobile stations (MS) and a base station (BS) of a TDMA mobile communication system, in which a shortened first burst (fb1) is transmitted as access burst in a time slot (ts) of the radio interface, **characterized in that** the transmission of the first burst (fb1) is synchronized at the transmitting end so that the first burst (fb1) arrives at the receiving radio station (BS, MS) at a predetermined time (t1) within the time slot (ts), and **in that** at least one second burst (fb2), which can be evaluated separately from the first burst (fb1), is transmitted in the same time slot (ts).

7. Method according to one of the preceding claims, **characterized in that** the transmission of the bursts (fb1, fb2) is synchronized in such a manner that the times (t1, t2) of the arrival of the bursts (fb1, fb2) lead to two received bursts (fb1, fb2) which essentially do not overlap.

8. Method according to one of the preceding claims, **characterized in that** the time (t1) of arrival of the first burst (fb1) is oriented towards the beginning of the time slot (ts).

9. Method according to one of the preceding claims, **characterized in that** the time slot (ts) is reserved for a packet data transmission method.

10. Mobile station (MS) for a TDMA mobile communication system for carrying out the method according to Claim 1 or 6, comprising a transceiver (SE) for transmitting and receiving bursts,
with a signal processing device (SP) for generating a first and/or a second burst (fb1, fb2),
with a controller (ST) for synchronizing the transmission of the first burst (fb1) within a time slot (ts) and for triggering the transmission of the first burst (fb1),
**characterized in that** the controller (ST) is constructed in such a manner that the synchronization of the transmission of the first burst (fb1) leads to a predetermined time of reception (t1) within the time slot (ts) at a base station (BS) so that the base station (BS) can evaluate at least one second burst (fb2), transmitted by another mobile station (MS), separately from the first burst (fb1) in the same time slot (ts).

11. Base station (BS) for a TDMA mobile communication system for carrying out the method according to Claim 1, comprising a receiving device (EE) for receiving at least two bursts (fb1, fb2) which can be separated in time and which have been transmitted by different mobile stations (MS) in one time slot (ts), comprising a signal evaluating device (SA) for separating and processing the bursts (fb1, fb2).

## Revendications

1. Procédé pour la transmission de signaux entre des radiostations (BS, MS) d'un système de communication mobile TDMA par l'intermédiaire d'une interface radiotéléphonique, dans lequel
un premier bloc radiotéléphonique (fb1) est transmis dans un créneau temporel (ts) de l'interface radiotéléphonique,
**caractérisé en ce que**
une synchronisation côté émission de la transmission du premier bloc radiotéléphonique (fb1) est réalisée, de sorte que le premier bloc radiotéléphonique (fb1) arrive à la radiostation réceptrice (BS, MS) à un moment prédéterminé (t1) du créneau temporel (ts), et
au moins un deuxième bloc radiotéléphonique (fb2) est transmis dans le même créneau temporel (ts), ce bloc étant évaluable séparément du premier bloc radiotéléphonique (fb1).

2. Procédé selon la revendication 1,
**caractérisé en ce que**
les blocs radiotéléphoniques (fb1, fb2) transmis dans un créneau temporel (ts) ont la même longueur.

3. Procédé selon la revendication 1,
**caractérisé en ce que**
différents types de blocs radiotéléphoniques (fb1, fb2) sont transmis dans un créneau temporel (ts).

4. Procédé selon l'une quelconque des revendications précédentes,
**caractérisé en ce que**
les radiostations sont une station de base (BS) et des stations mobiles (MS), et que le premier bloc radiotéléphonique (fb1) est un bloc radiotéléphonique raccourci en comparaison avec les autres blocs radiotéléphoniques (fbn).

5. Procédé selon la revendication 4,
**caractérisé en ce que**
le système de communication mobile est un réseau GSM de radiocommunication mobile et que le premier bloc radiotéléphonique (fb1) est un dit bloc d'accès.

6. Procédé pour la transmission de signaux entre des stations mobiles (MS) et une station de base (BS) d'un système de communication mobile TDMA par l'intermédiaire d'une interface radiotéléphonique, dans lequel un premier bloc radiotéléphonique raccourci (fb1) est transmis comme bloc d'accès dans un créneau temporel (ts) de l'interface radiotéléphonique,
**caractérisé en ce que**
une synchronisation côté émission de la transmission du premier bloc radiotéléphonique (fb1) est réalisée, de sorte que le premier bloc radiotéléphonique (fb1) arrive à la radiostation réceptrice (BS, MS) à un moment prédéterminé (t1) du créneau temporel (ts), et
au moins un deuxième bloc radiotéléphonique (fb2) est transmis dans le même créneau temporel (ts), ce bloc étant évaluable séparément du premier bloc radiotéléphonique (fb1).

7. Procédé selon l'une quelconque des revendications précédentes,
**caractérisé en ce que**
la transmission des blocs radiotéléphoniques (fb1, fb2) est synchronisée de telle manière que les moments (t1, t2) d'arrivée des blocs radiotéléphoniques (fb1, fb2) entraînent deux blocs radiotéléphoniques (fb1, fb2) reçus, ne se chevauchant pas en grande partie.

8. Procédé selon l'une quelconque des revendications précédentes,
**caractérisé en ce que**
le moment (t1) d'arrivée du premier bloc radiotéléphonique (fb1) s'oriente au début du créneau temporel (ts).

9. Procédé selon l'une quelconque des revendications précédentes,
**caractérisé en ce que**
le créneau temporel (ts) est réservé pour un procédé de transmission de données par paquets.

10. Station mobile (MS) pour un système de communication mobile TDMA pour la réalisation du procédé selon la revendication 1 ou 6,
avec un dispositif d'émission/de réception (SE) pour émettre et recevoir des blocs radiotéléphoniques,
avec un dispositif de traitement de signaux (SP) pour créer un premier et/ou un deuxième bloc radiotéléphonique (fb1, fb2),
avec un dispositif de commande (ST) pour synchroniser l'émission du premier bloc radiotéléphonique (fb1) dans un créneau temporel (ts) et pour déclencher l'émission du premier bloc radiotéléphonique (fb1),
**caractérisée en ce que**
le dispositif de commande (ST) est formé de telle manière que la synchronisation de la transmission du premier bloc radiotéléphonique (fb1) entraîne un moment de réception prédéterminé (t1) dans le créneau temporel (ts) dans une station de base (BS), de telle manière qu'au moins un deuxième bloc radiotéléphonique (fb2), émis par une autre station mobile (MS), est évaluable séparément du premier bloc radiotéléphonique (fb1) par la station de base (BS) dans le même créneau temporel (ts).

11. Station de base (BS) pour un système de communication mobile TDMA pour la réalisation du procédé selon la revendication 1,
avec un dispositif de réception (EE) pour recevoir au moins deux blocs radiotéléphoniques (fb1, fb2) séparables temporellement, émis dans un créneau temporel (ts) par différentes stations mobiles (MS),
avec un dispositif d'évaluation de signaux (SA) pour séparer et traiter les blocs radiotéléphoniques (fb1, fb2).
